# DEMANDE DE BREVET EUROPEEN

(11) **EP 0 564 375 A1**
(43) Date de publication de la demande: **06.10.1993**
(21) Numéro de dépôt: 93420118.7
(22) Date de dépôt: 16.03.1993
(51) Int. Cl.: E04F 13/08, F16B 37/04

(54) **Dispositif mobile pour le maintien de profilés à distance d'un substrat tel qu'un mur**

(30) Priorité: 02.04.1992 FR 9204316
(71) Demandeur: PLATRES LAFARGE, F-84800 Isle-Sur Sorgue (FR)
(72) Inventeur: Arese, Roger, F-84800 l'Isle-sur-Sorgue (FR); Zuber, François, F-84270 Vedene (FR)
(74) Mandataire: Guerre, Dominique

(57) **Abrégé**

L'invention concerne un dispositif mobile pour le maintien de profilés 32 à une distance donnée d'un substrat S qui se compose d'un élément de support 1, d'un élément de raccordement 31 et d'un élément d'espacement 13 et se caractérise en ce qu'il comporte des moyens destinés à assurer, aprés montage, un mouvement de translation parallèlement au plan du substrat S, ainsi qu'éventuellement un mouvement de rotation selon un axe perpendiculaire au plan du substrat S de l'un au moins des éléments de support 1, d'espacement 13 et de raccordement 31. L'élément de support 1 est fixé au substrat S directement ou par l'intermédiaire d'un profilé 5. Il peut être solidaire de l'élément d'espacement 13 ou être pourvu de moyens lui permettant de maintenir l'élément d'espacement 13 tout en lui autorisant une rotation sur lui-même ainsi qu'éventuellement une translation parallèlement au plan du substrat S. L'élément d'espacement 13 est adapté pour être relié avec l'élément de support 1 et pour recevoir l'élément de raccordement 31 tout en lui autorisant un ajustement de sa position selon une direction sensiblement perpendiculaire au plan du substrat S. L'élément de raccordement 31 est destiné à coopérer avec l'élément d'espacement 13 et à être relié à un profilé 32 servant d'élément d'appui pour des éléments de revêtement A.

## Description

La présente invention concerne un dispositif mobile pour le maintien de profilés destinés à supporter des éléments de revêtement à distance d'un substrat tel qu'un mur.

On connaît déjà des dispositifs d'entretoisement réglables tels que celui proposé par le brevet français 2.594.904. Ces dispositifs sont composés d'une structure d'entretoisement fixée au mur et sur laquelle vient se monter un élément de raccordement. La structure d'entretoisement est une tige filetée se terminant par un croisillon destiné à prendre appui sur le substrat, et l'élément de raccordement est une pièce à six pans traversée d'un taraudage, de façon à pouvoir être vissée sur ladite structure d'entretoisement.

On peut utiliser un tel dispositif de la manière suivante : on fixe le croisillon de la tige filetée au mur puis on visse la pièce à six pans sur la tige filetée. Lorsque la position de la pièce à six pans sur la tige filetée à croisillon est telle que la distance d'entretoisement désirée paraît bonne, on fixe sur une cornière haute et sur une cornière basse un profilé métallique vertical à retours internes et on encliquète le profilé sur la pièce à six pans. Mais pour pouvoir réaliser l'encliquetage, il faut disposer les rainures de la pièce à six pans de manière parallèle aux retours internes du profilé. Une fois l'encliquetage opéré, le dispositif est figé et des tensions peuvent apparaître lorsque la distance d'entretoisement n'est pas satisfaisante. Il n'est, en outre, plus possible de régler la distance séparant le profilé du mur, à moins de dégager la pièce à six pans du profilé, de la faire pivoter et de l'encliqueter à nouveau.

S'il est facile d'encliqueter la pièce à six pans dans le profilé, il est au contraire bien plus difficile de l'en dégager.

Par ailleurs, il faut s'assurer, à chaque fois, que les rainures de la pièce à six pans soient parallèles aux retours internes du profilé pour que l'encliquetage soit possible.

On peut également utiliser ce même dispositif en inversant l'ordre des opérations. On fixe alors, sur les cornières haute et basse, le profilé métallique vertical. On encliquète la pièce à six pans dans le profilé et on dévisse la tige filetée à croisillon jusqu'à ce qu'elle vienne en appui contre le mur. La solidarisation du dispositif avec le mur est ensuite réalisée.

Mais cette solidarisation est malaisée en raison de la présence gênante du profilé.

Quel que soit l'ordre du montage choisi, il est impératif d'effectuer le positionnement des dispositifs de façon précise, car les réglages sont impossibles après montage, l'ensemble profilé/dispositif étant figé. De plus, un tel dispositif nécessite pour sa mise en oeuvre un grand nombre d'opérations, ce qui entraîne d'importantes pertes de temps et diminue son intérêt économique.

Le but majeur de l'invention est de remédier aux inconvénients énoncés ci-dessus en proposant, à cet effet, un dispositif mobile dont la réalisation ainsi que la mise en oeuvre sont simples et économiques.

L'invention a donc pour objet un dispositif mobile pour le maintien de profilés à une distance donnée d'un substrat, comportant un élément de support, un élément de raccordement et un élément d'espacement.

Ce dispositif se caractérise en ce qu'il comporte des moyens destinés à assurer, après montage, un mouvement de translation parallèlement au plan du substrat ainsi qu'éventuellement un mouvement de rotation selon un axe perpendiculaire au plan du substrat, de l'un au moins des éléments de support, d'espacement et de raccordement.

Selon l'invention, l'élément de support est fixé au substrat directement ou par l'intermédiaire d'un profilé. Il peut être solidaire de l'élément d'espacement ou être pourvu de moyens lui permettant de maintenir l'élément d'espacement tout en lui autorisant une rotation sur lui-même ainsi qu'éventuellement une translation parallèlement au plan du substrat.

L'élément d'espacement est adapté pour être relié avec l'élément de support et pour recevoir l'élément de raccordement tout en lui autorisant un ajustement de sa position selon une direction perpendiculaire au plan du substrat.

L'élément de raccordement est destine à coopérer avec l'élément d'espacement et à être relié à un profilé servant d'élément d'appui pour des éléments de revêtement.

L'utilisation des adjectifs perpendiculaire ou parallèle dans la présente description ne doit pas être entendue de manière stricte mais comme signifiant également, respectivement, sensiblement perpendiculaire et sensiblement parallèle.

Un premier avantage du dispositif selon l'invention est qu'il est mobile. En effet, après mise en place du dispositif, la position des profilés servant d'éléments d'appui pour les élément de revêtement n'est pas définitive, il est donc encore possible de régler la distance d'espacement séparant le substrat des profilés et éventuellement celle séparant deux profilés l'un de l'autre.

De plus, grâce au dispositif selon l'invention, les réglages peuvent être très amples, et dès lors, le dispositif peut convenir pour le revêtement de substrats présentant de grands défauts de planéité.

En outre, contrairement aux dispositifs de l'art antérieur, le dispositif selon l'invention permet à l'opérateur d'effectuer avec simplicité et rapidité les différents types de réglage, ce qui se traduit par un gain de temps considérable lors de la mise en place des éléments de revêtement.

Un autre avantage encore est que les éléments composant le dispositif selon l'invention peuvent être réalisés par moulage. Leur nombre étant restreint, il s'ensuit des économies de matière et un coût de revient peu élevé du dispositif.

Au surplus, le dispositif selon l'invention permet d'utiliser des profilés très courants et peu coûteux, ce qui le rend plus intéressant d'un point de vue économique.

D'autres caractéristiques et avantages de l'invention ressortiront de la description qui va suivre, donnée uniquement à titre d'exemple, en référence aux dessins annexés, dans lesquels :
- la figure 1 est une vue en coupe d'un dispositif monte entre un profilé 32 supportant des plaques de plâtre A et un profilé 5 fixé au substrat S, l'espace entre le profilé 32 et le profilé 5 étant occupe par un matériau d'isolation M ;
- la figure 2 est une vue en coupe d'un dispositif monte selon une variante entre un profilé 32 supportant des plaques de plâtre A et le substrat S, l'espace entre les plaques de plâtre A et le substrat S étant occupé par un matériau d'isolation M ;
- la figure 3 est une vue en coupe d'un dispositif monte entre un profilé 32 supportant des plaques de plâtre A et le substrat S, l'espace entre les plaques de plâtre A et le substrat S étant occupé par un matériau d'isolation M et l'élément de support 1 étant représenté en section ;
- les figures 4, 5 et 6 représentent l'élément de support 1 respectivement en vue de face, de dessus et de côte en section selon A-A ;
- les figures 7 et 8 représentent deux profilés 5 et 32 de hauteur différente ;
- la figure 9 représente un élément d'espacement 13 ;
- les figures 10, 11 et 12 représentent une variante de l'élément d'espacement 13, respectivement en vue de face, de côte et de dessus ;
- la figure 13 représente une extrémité de l'élément d'espacement 13 ;
- la figure 14 représente un élément d'association 24 destine à s'assembler avec un tube en vue de réaliser un ensemble 30 représente sur la figure 15 qui est équivalent à l'élément d'espacement 13 représente sur la figure 13 ;
- les figures 16 et 17 représentent un élément de raccordement 31 respectivement en vue de face et de dessus ;
- les figures 18 et 19 représentent une variante 33 de l'élément de raccordement 31 respectivement en vue de face en section selon B-B et en vue de dessus ;
- les figures 20 et 21 représentent deux profilés 5 et 32 de hauteur différente coopérant avec le même élément de raccordement 31.
- les figures 22 et 23 représentent une variante 40 de l'élément de raccordement 31.
- la figure 24 représente une vue en coupe d'une variante du dispositif selon l'invention comportant ladite variante 40, monté entre un profilé 32 supportant des plaques de plâtre A et le substrat S, l'espace entre les plaques de plâtre A et le substrat S étant occupé par un matériau d'isolation M.

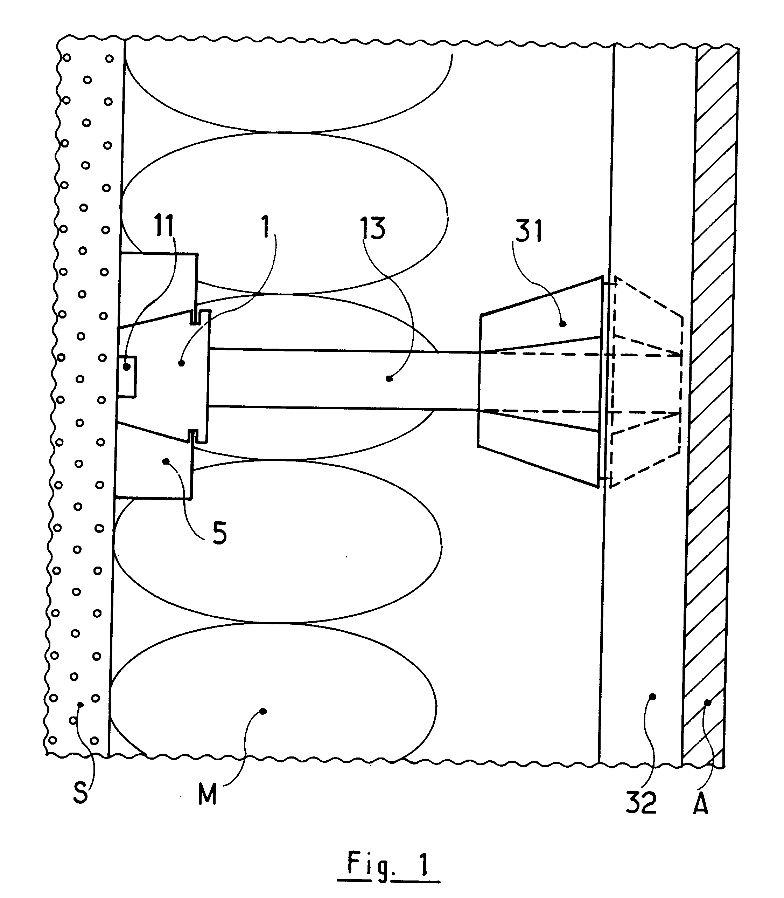

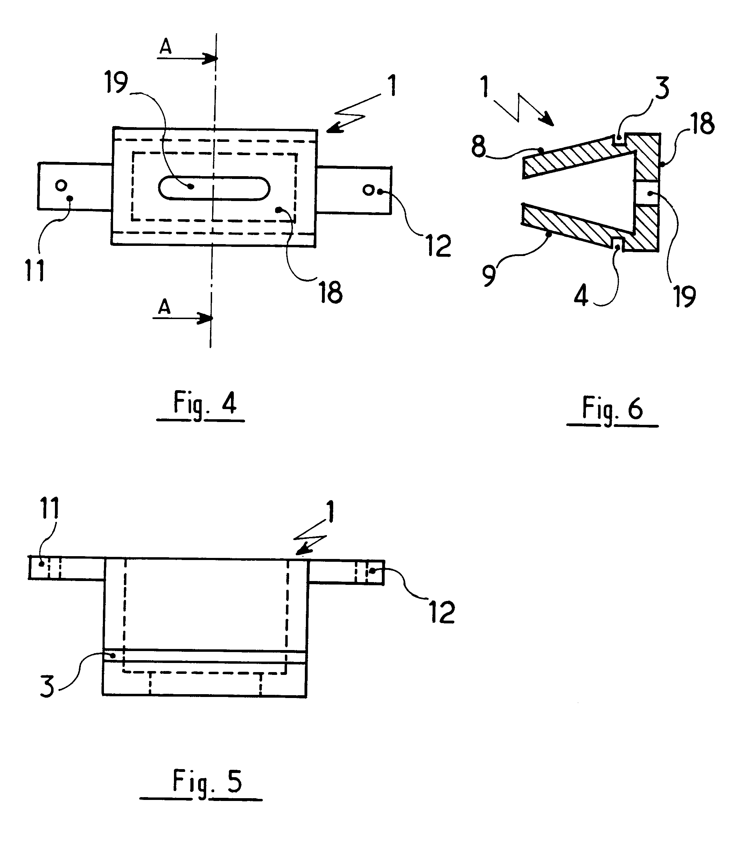

Sur la figure 1 est représenté l'élément de support 1 fixé au substrat par l'intermédiaire d'un profilé 5. Cet élément de support 1, illustré plus en détail par les figures 4, 5 et 6, est un volume à base de deux rectangles dont les côtés sont parallèles deux à deux et dont les largeurs sont différentes. Il est de préférence muni de deux rainures parallèles 3 et 4.

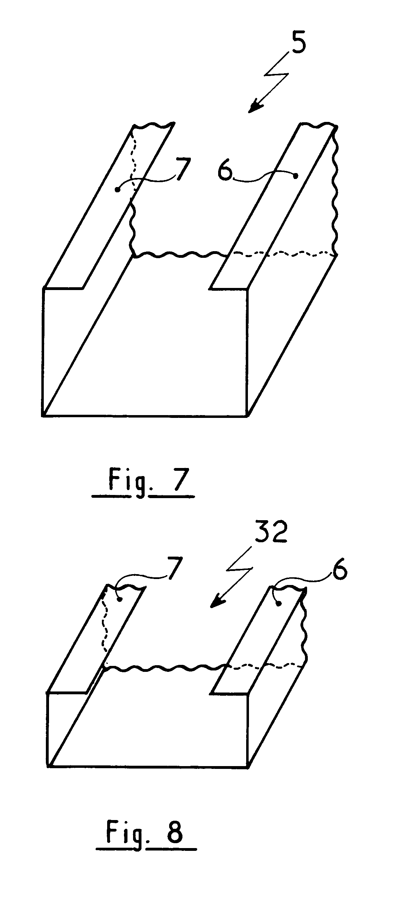

Ces rainures 3 et 4 sont destinées à recevoir les retours internes d'un profilé 5 à deux retours internes 6 et 7 et illustre plus en détail par la figure 7.

Afin que l'engagement des retours internes 6 et 7 dans les rainures 3 et 4 soit possible, l'un des rectangles de base de l'élément de support 1 présente de préférence une largeur inférieure à la distance séparant lesdits retours 6 et 7. L'élément de support 1 comporte alors deux faces inclinées 8 et 9 qui permettent l'écartement des retours internes 6 et 7 du profilé 5 puis l'encliquetage, c'est-à-dire l'engagement desdits retours internes 6 et 7 dans lesdites rainures 3 et 4.

Grâce à ses rainures 3 et 4, l'élément de support 1 peut coulisser à l'intérieur du profilé 5 tout en étant maintenu.

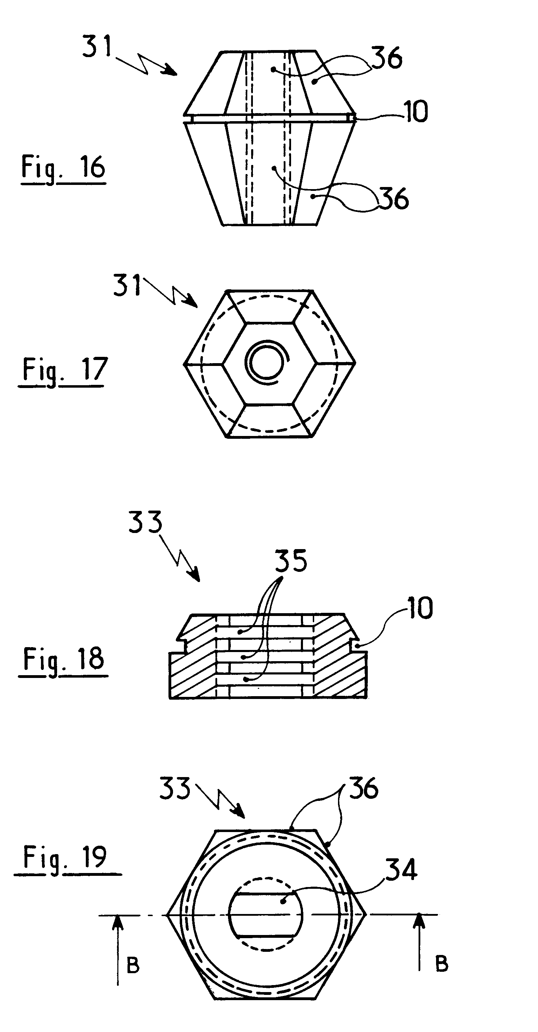

Selon une variante, l'élément de support 1 est un volume de révolution tel qu'une sphère, un cylindre, un cône, un tronc de cône ou un cylindre associé à au moins un cône ou une sphère. Les rainures 3 et 4 sont alors avantageusement remplacées par au moins une gorge continue et l'élément de support 1 peut présenter une forme telle que celle représentée sur les figures 16 et 17 .

Il est possible de munir l'élément de support 1 de plusieurs gorges continues afin de lui permettre une coopération avec des profilés de hauteurs différentes.

Du fait de la gorge continue 10 visible sur les figures 16 et 17, l'élément de support 1 peut effectuer, en plus du coulissement parallèlement au plan du substrat S à l'intérieur du profilé 5, une rotation par rapport à celui-ci selon un axe perpendiculaire au plan dudit substrat S.

Les vis maintenant le profilé 5 au substrat S peuvent être avantageusement disposées à des intervalles non réguliers le long du profilé 5 de façon à pallier l'absence de planéité du substrat S ; elles peuvent être vissées sur les bosses, les protubérances. Ceci représente un grand intérêt lors de la réhabilitation d'habitations anciennes dont les murs ont une surface irrégulière.

L'élément de support 1 peut, en complément ou en remplacement des rainures 3 et 4, être pourvu de moyens de fixation directe au substrat S. Ces moyens peuvent être constitués par des pattes 11 et 12 visibles sur les figures 4 et 5. Lorsque l'élément de support 1 est déjà muni de rainures 3 et 4, les pattes 11 et 12 sont de préférence disposées de manière parallèle aux rainures 3 et 4 et de façon à ce qu'elles n'entravent pas, en cas de fixation au substrat S par l'intermédiaire d'un profilé 5, les translations de l'élément de support 1 par rapport au dit profilé 5.

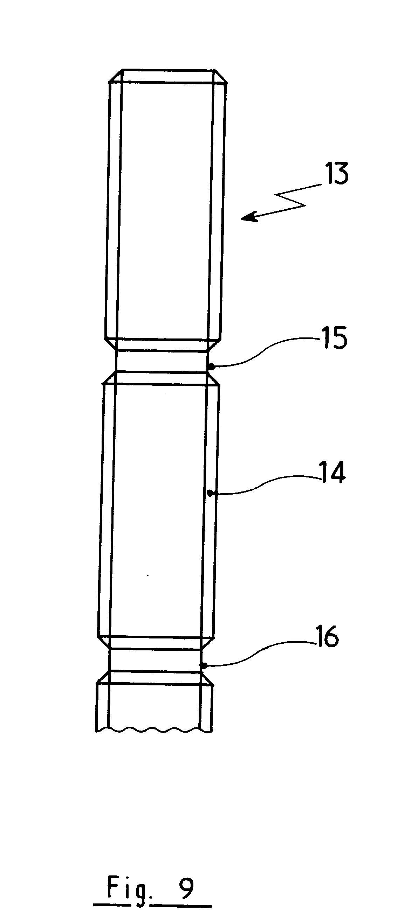

Selon l'invention, l'élément de support 1 est destiné à être relié à un élément d'espacement 13 représenté sur la figure 9. Cet élément d'espacement 13 possède une forme cylindrique. Il est de préférence pourvu d'un filetage 14 qui peut être interrompu par endroits 15 et 16 de façon à ce qu'il puisse être découpé selon la longueur d'espacement voulue.

L'élément de support 1 et l'élément d'espacement 13 peuvent être rendus solidaires de façon connue, par exemple par collage.

L'élément de support 1 peut être muni de moyens de maintien de l'élément d'espacement 13 ; ces moyens peuvent autoriser l'élément d'espacement 13 à effectuer une rotation sur lui-même ainsi qu'éventuellement une translation par rapport à l'élément de support 1.

Si l'on souhaite maintenir l'élément d'espacement 13, tout en lui permettant de tourner sur lui-même, on munit, par exemple d'un trou ou d'un trou oblong 19, une face 18 prévue pour être parallèle au plan du substrat S lorsque le dispositif est monte comme représenté sur les figures 4, 5 et 6.

Si ladite face 18 est munie d'un trou oblong 19, l'élément d'espacement 13 peut effectuer, outre une rotation sur lui-même, une translation selon une direction parallèle au plan du substrat S.

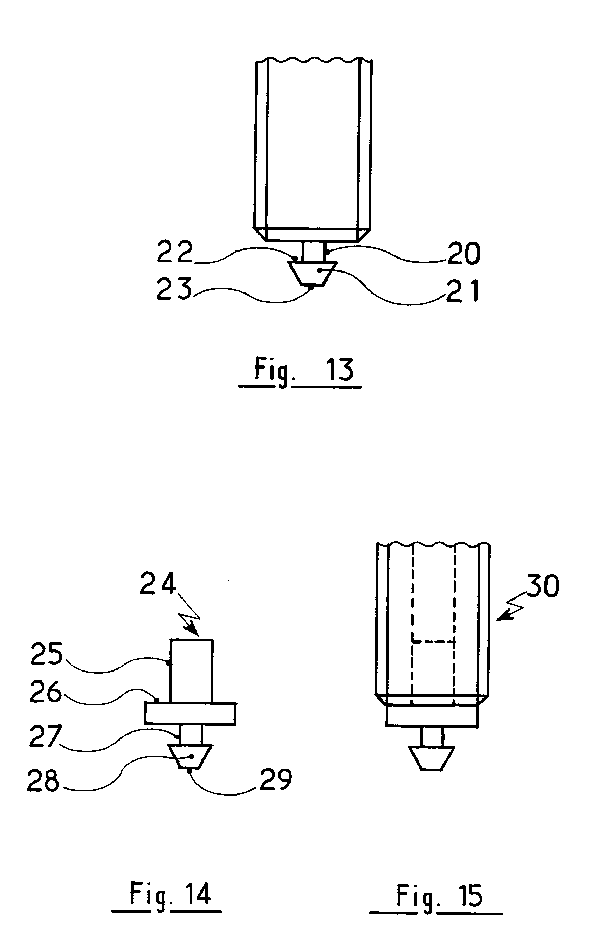

Afin de pouvoir coopérer avec l'élément de support 1, l'élément d'espacement 13, comme illustré sur la figure 13, peut être doté à l'une de ses extrémités d'une gorge 20 de diamètre au plus égal à la largeur du trou oblong 19 de l'élément de support 1 et, à côté de cette gorge 20, d'une partie terminale conique ou tronconique 21 dont la base 22 a un diamètre supérieur à celui du trou oblong 19. Le diamètre du sommet 23 de la partie terminale conique ou tronconique 21 est alors prévu au plus égal à la largeur du trou oblong 19, de façon à ce que l'élément d'espacement 13 puisse être introduit par encliquetage dans le trou oblong 19 et y demeurer maintenu tout en pouvant coulisser et tourner sur lui-même grâce à ladite gorge 20.

L'élément d'espacement 13 peut être réalisé en deux parties. Ce peut être un simple tube, rendu solidaire d'un élément d'association 24 représenté à la figure 14. Cet élément d'association 24 est de préférence de forme cylindrique et comporte à l'une de ses extrémités un épaulement 25 de diamètre adapté pour pouvoir être introduit à l'intérieur dudit tube et éventuellement y demeurer en butée contre la surface 26, de manière à réaliser l'ensemble 30 représenté sur la figure 15.

A l'autre extrémité de cet élément d'association 24 est prévue une gorge 27 de diamètre au plus égal à la largeur du trou oblong 19 de l'élément de support 1 ainsi qu'une extrémité conique ou tronconique 28 dont le diamètre du sommet 29 est prévu au plus égal à la largeur dudit trou oblong 19 afin de faciliter son introduction par encliquetage dans ledit trou 19, la gorge 27 permettant alors les mouvements de rotation et éventuellement de translation par rapport à l'élément de support 1.

La solidarisation de l'élément d'association 24 avec ledit tube est réalisée de façon connue, par exemple en choisissant pour l'épaulement 25, un diamètre faiblement supérieur au diamètre interne du tube et en introduisant de force l'épaulement 25 à l'intérieur du tube.

Sur l'élément d'espacement 13 vient se monter un élément de raccordement 31. Cet élément de raccordement 31 présente de préférence la forme d'un cylindre, d'une sphère, d'un cône, d'un tronc de cône ou d'un cylindre associé à au moins un cône ou une sphère. Il peut présenter la forme représentée en détail sur les figures 16 et 17 et est muni de préférence d'une gorge continue 10 de façon à ce qu'il puisse, avant ou après le montage du dispositif, effectuer une rotation par rapport à un profilé servant d'élément d'appui pour des éléments de revêtement avec lequel il est destiné à coopérer. Ce profilé est un profilé à deux retours internes tel que le profilé 32 représenté par la figure 8.

Lorsque la liaison entre l'élément d'espacement 13 et l'élément de raccordement 31 est du type vis-écrou, l'élément d'espacement 13 est muni d'un filetage 14 et l'élément de raccordement 31 est traverse d'un trou muni d'un taraudage correspondant au filetage 14 de l'élément d'espacement 13.

La rotation de l'élément de raccordement 31 permet alors le réglage de sa position selon une direction perpendiculaire au plan du substrat S et donc le rapprochement ou l'éloignement du profilé 32 par rapport au substrat S.

De préférence, l'élément de raccordement 31 présente au moins une extrémité chanfreinée ou biseautée. Il est muni avantageusement de pans 36 facilitant son entraînement manuel en rotation. Ces pans 36 sont avantageusement biseautés de manière à rendre aisée son insertion entre les retours internes 6 et 7 du profilé 32 et l'engagement de ces derniers dans la gorge continue 10.

Il s'avère particulièrement avantageux de doter l'élément de raccordement 31 de plusieurs séries différentes de pans 36 situées, l'une au dessus du plan défini par la gorge continue 10 et l'autre au-dessous de ce même plan, l'inclinaison des pans étant telle que l'approche d'un profilé puisse se faire aussi bien par au-dessus que par en dessous dudit plan.

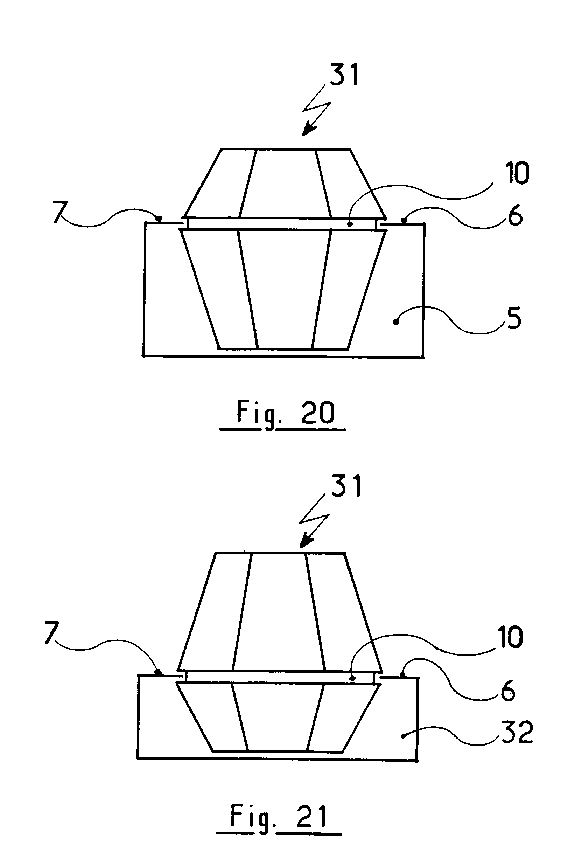

Ainsi, l'élément de raccordement 31 peut, comme illustre par les figures 20 et 21, coopérer avec un profilé tel que le profilé 32 ou avec un profilé de hauteur différente, comme le profilé 5.

La liaison entre l'élément d'espacement 13 et l'élément de raccordement 31 n'est pas nécessairement une liaison du type vis-écrou.

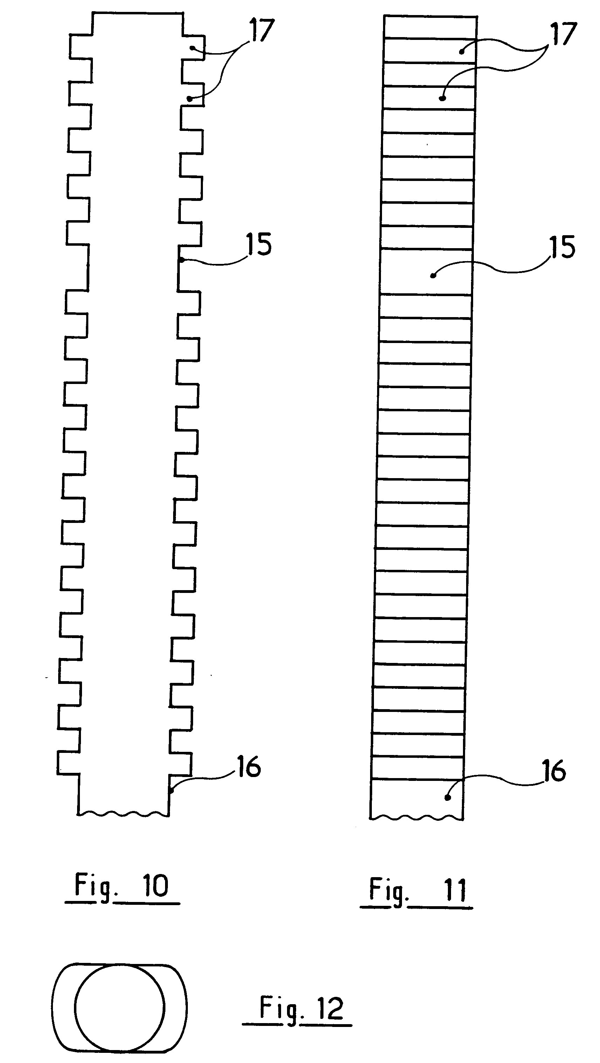

En effet, on peut utiliser une variante de l'élément d'espacement 13, illustrée sur les figures 10, 11 et 12. Cette variante est munie de dents 17 parallèles les unes aux autres et perpendiculaires à son axe longitudinal. Ces dents 17 ne sont pas présentes sur toute la circonférence, mais sont amputées symétriquement de deux segments, de façon à ce que ladite variante, vue de dessus, présente globalement, comme illustré par la figure 12, une forme oblongue.

L'élément de raccordement 31 mis en oeuvre peut alors être la variante 33 représentée par les figures 18 et 19, traversée par un trou oblong 34 dont la largeur est au moins égale au diamètre de ladite variante de l'élément d'espacement 13 mesuré entre les dents 17. L'intérieur de cette variante 33 comporte des gorges 35, parallèles les unes aux autres, dont l'épaisseur est en conformité avec celle des dents 17 avec lesquelles elles sont destinées à coopérer.

La mise en place et le réglage de la position de ladite variante 33, le long de l'axe longitudinal de la variante de l'élément d'espacement 13 représenté sur les figures 10 à 12 se fait en orientant ladite variante 33 de façon à ce que ladite variante de l'élément d'espacement 13 puisse s'engager dans ladite variante 33 de l'élément de raccordement 31 et se déplacer en translation par rapport à cette dernière. Lorsque la position de ladite variante 33, le long dudit axe longitudinal, est satisfaisante, une rotation d'environ 90° de ladite variante 33 suivant l'axe longitudinal de ladite variante de l'élément d'espacement 13 permet aux dents 17 de venir s'insérer ou s'incruster dans les gorges 35 de ladite variante 33.

L'élément de raccordement 31 et sa variante 33 peuvent comporter plusieurs gorges continues afin d'accroître le nombre de profilés avec lesquels ils peuvent coopérer.

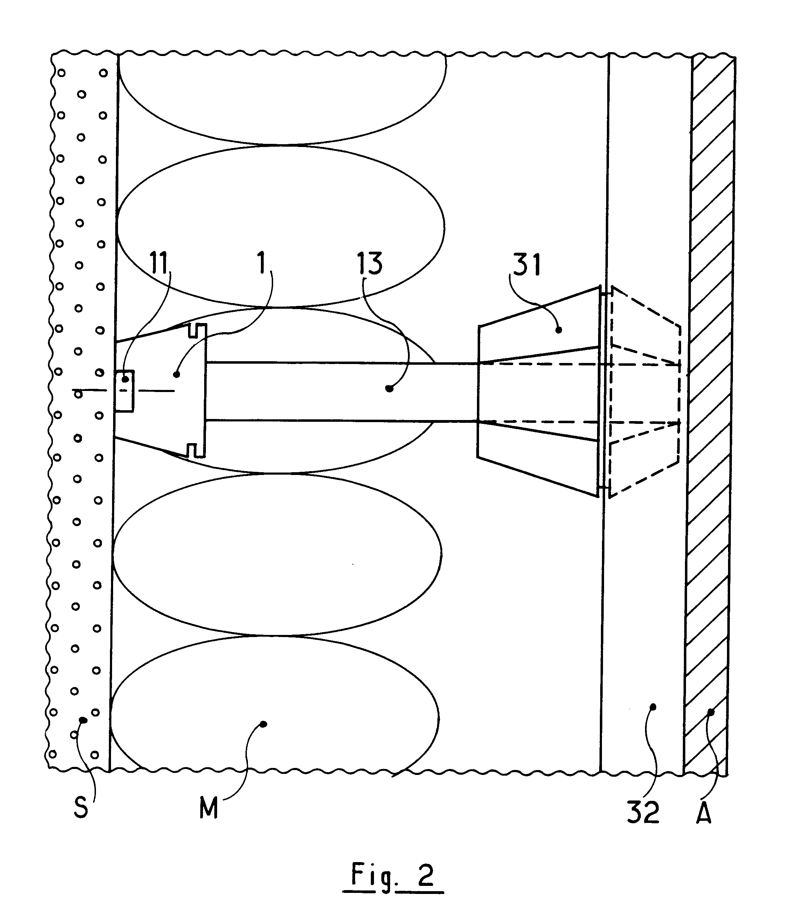

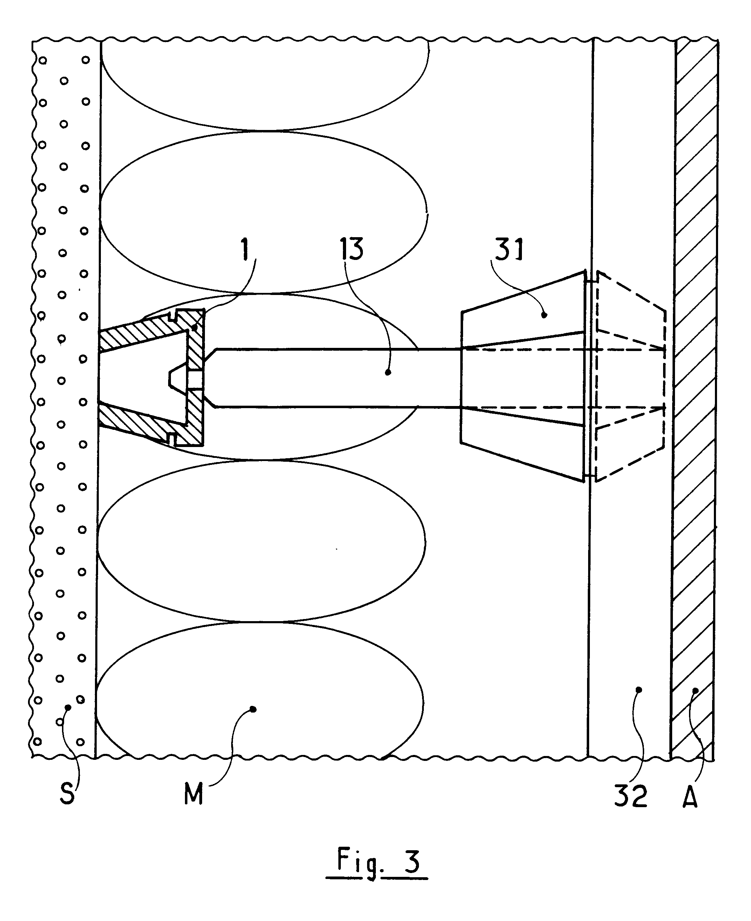

La mise en oeuvre du dispositif selon l'invention s'effectue alors de la manière suivante, illustrée par les figures 1, 2 et 3 :
- Fixation de l'élément de support 1 contre le substrat S de manière connue, le cas échéant par l'intermédiaire d'un profilé tel que le profilé 5 ,
- Mise en place par encliquetage de l'élément d'espacement 13 dans l'élément de support 1, dans le cas où ils ne sont pas solidaires,
- Mise en place éventuelle du matériau d'isolation M,
- Mise en place de l'élément de raccordement 31 par vissage, ou de sa variante 33 comme indiqué ci-dessus,
- Réglage de la distance séparant l'élément de raccordement 31 ou de sa variante 33 du substrat S,
- Fixation par encliquetage du profilé 32, destiné à recevoir les éléments plans A,
- Fixation, de façon connue, sur des cornières haute et basse, du profilé 32.
- Fixation des éléments plans A sur le profilé 32 de manière connue.

Grâce au dispositif selon l'invention, lorsque la fixation de l'élément de support 1 est faite par l'intermédiaire d'un profilé 5 fixé au substrat S ou lorsque l'élément de support 1 est pourvu d'un trou oblong 19, l'opérateur peut gagner, lors du revêtement d'une surface, un temps considérable car ses mesures peuvent être moins précises donc plus rapides.

La compensation des erreurs commises lors du positionnement de l'élément de support 1 peut s'opérer très rapidement grâce à la mobilité de l'élément d'espacement 13 par rapport au substrat S, les profilés 32 étant rapprochés ou éloignés les uns des autres manuellement par un simple déplacement suivant une direction parallèle au plan du substrat S. Par rapport aux systèmes de l'art antérieur qui nécessitaient des dévissages et des revissages d'écrous situes dans des endroits difficiles d'accès, il en résulte, comme évoqué précédemment, un gain de temps appréciable.

Lorsque l'élément d'espacement 13 peut effectuer une rotation autour d'un axe perpendiculaire au plan du substrat S, c'est-à-dire quand l'élément d'espacement 13 peut tourner par rapport à l'élément de support 1 ou quand ce dernier présente une forme équivalente à celle de l'élément de raccordement 31 et est utilise avec un profilé 5 fixé au mur, il n'est pas nécessaire que l'élément de raccordement 31 soit muni d'une gorge continue 10.

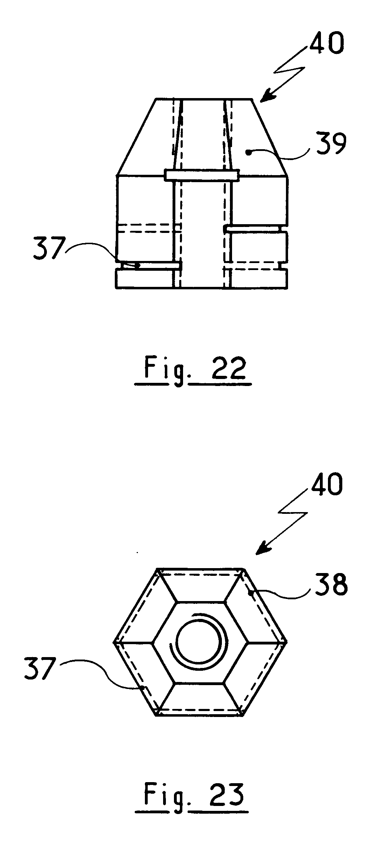

Il est en effet possible de mettre en oeuvre une variante 40 de l'élément de raccordement 31, représentée par les figures 22 et 23, disposant d'au moins une paire de rainures parallèles 37 et 38 destinées à recevoir les retours internes d'un profilé tel que le profilé 32. Cette variante 40 présente la forme d'un écrou dont les pans 39 ont été chanfreinés pour faciliter la coopération avec le profilé 32.

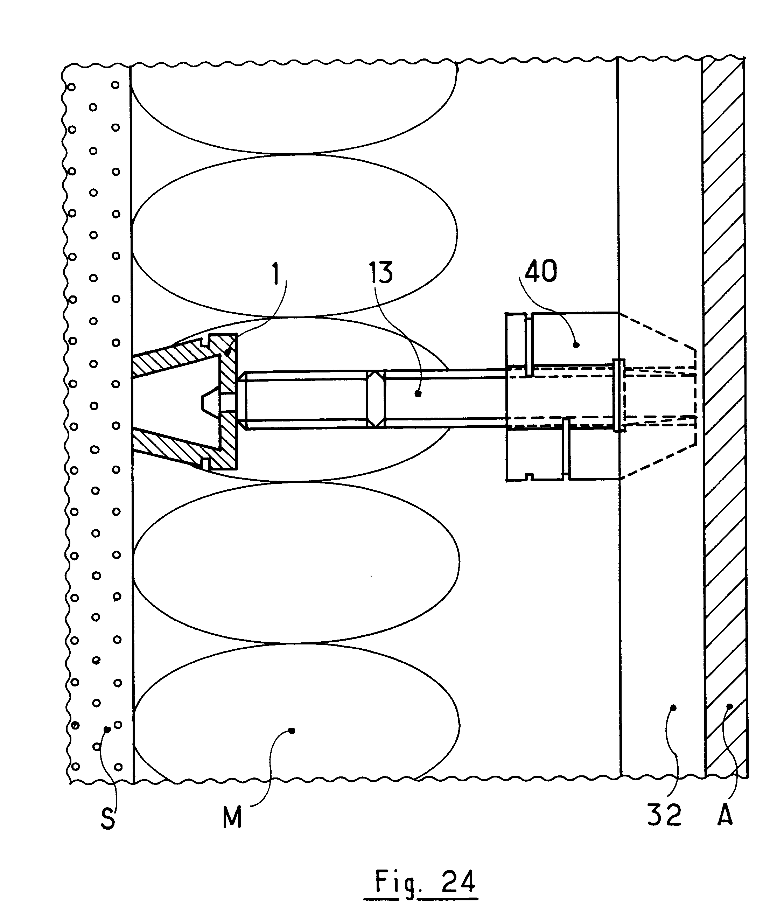

Pour la mise en oeuvre du dispositif on procède alors de la manière suivante, illustrée par la figure 24 :
- fixation sur le substrat S par chevillage, par collage ou par l'intermédiaire d'un profilé 5, de l'élément de support 1 sur lequel on aura, le cas échéant, préalablement monté par encliquetage l'élément d'espacement 13 éventuellement solidaire de l'élément d'association 24 ;
- mise en place éventuelle d'un matériau d'isolation M qui est alors traversé par l'élément d'espacement 13 ;
- mise en place par vissage sur l'élément d'espacement 13 de ladite variante 40 de l'élément de raccordement 31 représentée par les figures 22 et 23 ;
- fixation par encliquetage du profilé 32 sur ladite variante 40 ;
- fixation, de façon connue, sur des cornières haute et basse du profilé 32 ;
- réglage de la distance séparant le profilé 32 du substrat S par simple entraînement manuel en rotation de l'élément d'espacement 13.

Les dispositifs décrits ci-dessus peuvent être réalisés, en tout ou partie, par exemple en matière plastique, en métal ou en tout autre matériau.

Il va sans dire que les formes des différents éléments constitutifs du dispositif peuvent se présenter sous de nombreuses variantes équivalentes à celles décrites, sans pour cela sortir du cadre de l'invention.

## Revendications

1. Dispositif mobile pour le maintien de profilés 32 à une distance donnée d'un substrat S qui se compose d'un élément de support 1, d'un élément de raccordement 31 et d'un élément d'espacement 13, caractérisé en ce qu'il comporte des moyens destinés à assurer, après montage, un mouvement de translation parallèlement au plan du substrat S, ainsi qu'éventuellement un mouvement de rotation selon un axe perpendiculaire au plan du substrat S, de l'un au moins des éléments de support 1, d'espacement 13 et de raccordement 31.

2. Dispositif selon la revendication 1, caractérisé en ce que l'élément de support 1 est choisi dans le groupe constitué par une sphère, un cylindre, un cône, un tronc de cône, un cylindre associé à au moins un cône ou une sphère et un volume à base de deux rectangles dont les côtés sont parallèles deux à deux et dont les largeurs sont différentes.

3. Dispositif selon la revendication 2, caractérisé en ce que l'élément de support 1 est un volume à base de deux rectangles dont les côtés sont parallèles deux à deux et dont les largeurs sont différentes, muni d'au moins deux rainures parallèles 3 et 4.

4. Dispositif selon la revendication 2, caractérisé en ce que l'élément de support 1 est une sphère, un cylindre, un cône, un tronc de cône ou un cylindre associé à au moins un cône ou une sphère, muni d'une gorge continue 10.

5. Dispositif selon l'une quelconque des revendications 1 à 4, caractérisé en ce que l'élément de support 1 comporte des moyens connus de fixation au substrat S.

6. Dispositif selon l'une quelconque des revendications 1 à 5, caractérisé en ce que l'élément de support 1 est pourvu de moyens de maintien de l'élément d'espacement 13.

7. Dispositif selon l'une quelconque des revendications 1 à 6, caractérisé en ce que les moyens de maintien de l'élément d'espacement 13 sont constitués par un trou ou un trou oblong 19 situé sur une face 18 prévue pour être au moins sensiblement parallèle au plan du substrat S lorsque le dispositif est monté.

8. Dispositif selon l'une quelconque des revendications 1 à 7, caractérisé en ce que l'élément d'espacement 13 présente une forme cylindrique.

9. Dispositif selon l'une quelconque des revendications 1 à 8, caractérisé en ce que l'élément d'espacement 13 est doté à l'une de ses extrémités d'une gorge 20 de diamètre au plus égal à la largeur du trou oblong 19 de l'élément de support 1 et, à côté de cette gorge 20, d'une partie terminale conique ou tronconique 21 dont la base 22 a un diamètre supérieur à celui du trou oblong 19 et le sommet 23 a un diamètre au plus égal à la largeur du trou oblong 19.

10. Dispositif selon l'une quelconque des revendications 1 à 8, caractérisé en ce que l'élément d'espacement 13 est un tube rendu solidaire de façon connue d'un élément d'association 24 de forme cylindrique et composant à l'une de ses extrémités un épaulement 25 de diamètre adapté pour pouvoir être introduit à l'intérieur dudit tube, et à l'autre extrémité une gorge 27 de diamètre au plus égal à la largeur du trou oblong 19 de l'élément de support 1 ainsi qu'une extrémité conique ou tronconique 28 dont le diamètre du sommet 29 est au plus égal à la largeur dudit trou oblong 19.

11. Dispositif selon l'une quelconque des revendications 1 à 10, caractérisé en ce que l'élément de support 1 et l'élément d'espacement 13 sont rendus solidaires de façon connue.

12. Dispositif selon l'une quelconque des revendications 1 à 11, caractérisé en ce que l'élément de raccordement 31 possède la forme d'un cylindre, d'une sphère, d'un cône, d'un tronc de cône ou d'un cylindre associé à au moins un cône ou une sphère et comporte au moins une gorge continue 10 permettant sa rotation par rapport au profilé 32 avant ou après le montage du dispositif.

13. Dispositif selon l'une quelconque des revendications 1 à 12, caractérisé en ce que l'élément d'espacement 13 est pourvu d'un filetage 14, éventuellement interrompu, et en ce que l'élément de raccordement 31 présente un taraudage correspondant au filetage 14 de l'élément d'espacement 13.

14. Dispositif selon l'une quelconque des revendications 1 à 12, caractérisé en ce que l'élément d'espacement 13 est muni de dents 17 parallèles les unes aux autres et perpendiculaires à son axe longitudinal, ces dents 17 étant amputées symétriquement de deux segments de façon à ce que l'élément de d'espacement 13 présente, vu de dessus, une forme oblongue, et en ce que l'élément de raccordement 31 est traversé par un trou oblong 34 dont la largeur est au moins égale au diamètre dudit élément d'espacement 13 mesuré entre les dents 17 et comporte des gorges 35 parallèles les unes aux autres et d'épaisseur en conformité avec celles des dents 17 avec lesquelles elles sont destinées à coopérer.

15. Dispositif selon l'une quelconque des revendications 1 à 14, caractérisé en ce que l'élément de raccordement 31 présente au moins une extrémité chanfreinée ou biseautée.

16. Dispositif selon l'une quelconque des revendications 1 à 15, caractérisé en ce que l'élément de raccordement 31 est muni de pans 36 facilitant son entraînement manuel en rotation.

17. Dispositif selon l'une quelconque des revendications 1 à 16, caractérisé en ce que l'élément de raccordement 31 est muni d'au moins deux séries différentes de pans 36 situées respectivement au-dessus et au-dessous du plan défini par la gorge 10, de façon à ce qu'il puisse être utilisé avec des profilés de hauteurs différentes.

18. Dispositif selon l'une quelconque des revendications 1 à 11, caractérisé en ce que l'élément de raccordement 31 présente au moins une paire de rainures parallèles 37 et 38.

19. Utilisation du dispositif selon l'une quelconque des revendications 1 à 18, caractérisée en ce que l'élément de support 1 est fixé directement sur le substrat S de manière connue.

20. Utilisation du dispositif selon l'une quelconque des revendications 1 à 18, caractérisée en ce que l'élément de support 1 est fixé sur le substrat S par l'intermédiaire d'un profilé 5.
